# FASCICULE DE BREVET EUROPEEN

(11) **EP 1 800 742 B1**
(45) Date de publication et mention de la délivrance du brevet: **17.06.2009**
(21) Numéro de dépôt: 06291723.2
(22) Date de dépôt: 03.11.2006
(51) Int. Cl.: B01J 8/28, B01J 8/18, B01J 8/24, C10G 11/18, B01J 8/00

(54) **Réacteur à deux zones réactionnelles fluidisées avec système de séparation gaz/solide intégré**
Reaktor mit zwei fluidisierbaren Reaktionsstufen und einem integrierten Gas/Feststofftrennsystem
Reactor comprising two fluidised reaction zones and an integrated gas/solid separation system

(30) Priorité: 20.12.2005 FR 0513208
(43) Date de publication de la demande: 27.06.2007
(73) Titulaire: Institut Français du Pétrole, 92852 Rueil Malmaison Cedex (FR)
(72) Inventeur: Ross, Joseph, Princeton New Jersey 08540 (US); Gauthier, Thierry, 69530 Brignais (FR); Andreux, Régis, 69340 Francheville (FR)

(56) Documents cités:
- EP-A- 1 046 696
- EP-A- 1 052 219
- US-A- 2 461 958
- US-A- 3 305 475
- US-A- 4 789 458
- US-A- 4 978 440
- US-A- 5 112 576

## Description

L'invention concerne un nouveau type de réacteur à lits fluidisé gaz solide possédant un système de séparation gaz solide intégré, c'est à dire faisant totalement partie de l'ensemble réactionnel. On entend par ensemble réactionnel la succession des différentes zones réactionnelles qui, dans le cas de la présente invention, comprend au moins une zone fonctionnant en lit fluidisé dense ou rapide suivie d'une seconde zone fonctionnant en lit fluidisé transporté, qu'on appellera de manière simplifiée lit transporté. Cette zone en régime transporté est souvent appelé riser" dans la terminologie anglo-saxonne .

Avec un catalyseur de craquage catalytique classique, la fluidisation dense est généralement observée entre 1 cm/s et 30 cm/s environ. La fluidisation en régime rapide s'étend grossièrement de 30 cm/s à 1m/s.

La fluidisation en lit entraîné est réalisée dans le riser des unités de craquage catalytique dans lequel les vitesses gaz évoluent typiquement entre 2 m/s et 7 m/s au bas du riser pour atteindre 10 à 30 m/s au sommet de celui-ci.

Les vitesses de fluidisation sont données ici à titre d'exemple, et pour des particules de craquage catalytique dont la taille est typiquement comprise entre 50 et 80 µm (microns). L'homme du métier sait que les frontières entre les différents régimes ne sont pas rigides et dépendent des caractéristiques des particules solides et de la nature du gaz de fluidisation.

On rencontre des réacteurs à lits fluidisés présentant plusieurs régimes de fluidisation dans les unités de craquage catalytique, dans certaines chaudières à lits fluidisés, dans la synthèse de l'acrylonitrile, dans les synthèses Fischer Tropsch, dans les réacteurs de polymérisation des oléfines pour former du polyéthylène, ainsi que dans des procédés permettant la conversion du méthanol en oléfines.

Cette liste n'est pas exhaustive, et la présente invention s'applique à tout procédé utilisant un réacteur fluidisé gaz solide présentant au moins deux zones réactionnelles, une première zone fonctionnant en régime de fluidisation dense ou rapide au sens défini plus haut, suivie d'une seconde zone fonctionnant en régime transporté. Les termes premier et second sont à prendre au sens de l'écoulement des fluides.

L'invention concerne également un dispositif de séparation gaz solide situé en sortie de la seconde zone réactionnelle fonctionnant en lit transporté, le dit dispositif de séparation gaz solide permettant de contrôler de façon stricte le temps de séjour des gaz dans la zone réactionnelle en lit transporté et dans le système de séparation lui même.

L'intérêt de l'enchaînement décrit dans la présente invention consistant en une première zone fonctionnant en lit dense ou rapide, suivie d'une seconde zone fonctionnant en lit transporté, suivie elle même d'un dispositif de séparation gaz solide, est de permettre une gradation des temps de séjour entre les différentes zones, le temps de séjour le plus important étant obtenu dans la première zone réactionnelle (fonctionnant en lit dense ou rapide) au sein de laquelle se déroule la majorité des réactions, suivi d'un temps de séjour plus court dans la seconde zone réactionnelle opérant en régime transporté. Il est également possible de mettre en oeuvre des réactions rapides dans la seconde zone réactionnelle en injectant dans ladite zone des réactifs secondaires, ou de modifier la température de l'écoulement en injectant dans ladite zone transportée un fluide chaud ou froid selon l'application désirée.

On définit pour l'ensemble du texte le temps de séjour comme étant le rapport entre le volume de la zone réactionnelle concernée et le débit de gaz, et le temps de contact comme étant le volume de la phase catalytique dans la zone réactionnelle concernée rapporté au débit de gaz. Le temps de contact permet de décrire de façon plus fine le temps caractéristique de mise en oeuvre de la réaction catalytique.

### EXAMEN DE L'ART ANTERIEUR

L'art antérieur concernant les réacteurs à lits fluidisés pour les unités de FCC est vaste et on se limitera à l'examen des documents dans lesquels se trouve une description d'un dispositif de séparation gaz solide en sortie de riser.

Le document US 4 978 440 décrit un procédé de craquage catalytique utilisant un réacteur de type "riser" avec une injection d'un fluide de refroidissement réalisée au dessus de la phase dense située en aval du riser. La séparation gaz solide est réalisée par un ensemble de cyclones directement connectés au riser.

Le document US 5 112 576 décrit une unité de craquage catalytique possédant un système de séparation du catalyseur en sortie de riser qui est composé d'un cyclone interne positionné à l'intérieur d'une enceinte de désengagement , suivi d'un système de séparation externe à ladite enceinte.

Le document US 4 789 458 décrit un procédé de craquage catalytique dans lequel la zone de stripage et la zone de régénération ont des niveaux de température bien spécifiques. Le dispositif de séparation gaz solide en sortie de riser est du type à cyclones directement connectés au "riser".

Aucun des documents cités ne décrit une configuration de zones réactionnelles dans laquelle le "riser" (qu'on peut identifier à la seconde zone réactionnelle fonctionnant en régime transporté de la présente invention), est précédé d'une première zone réactionnelle fonctionnant en lit dense ou rapide. Aucun des documents cités ne décrit un système de séparation gaz solide en sortie de riser tel que celui faisant partie de la présente invention. Or il est connu de l'homme du métier que le système de séparation gaz solide situé en sortie du riser permet de limiter les réactions de dégradation des produits issus du craquage primaire et joue donc un rôle important dans la sélectivité. Le système de séparation gaz solide selon la présente invention permet de garantir un temps de séjour des gaz dans ledit séparateur compris entre 0,5 s et 3 secondes. Il a donc un effet direct sur le contrôle des réactions de dégradation thermique non souhaitées dans le contexte du craquage catalytique, et plus encore du craquage à haute sévérité en vue de co-produire une certaine quantité de propylène.

De manière plus générale, la présente invention se distingue des réacteurs de l'art antérieur en ce que le temps de séjour global dans le réacteur est non seulement parfaitement contrôlé, mais également sa distribution dans les différentes zones du réacteur, à savoir la première zone réactionnelle, la seconde zone réactionnelle et le système de séparation gaz solide.

### DESCRIPTION SOMMAIRE DES FIGURES

La figure 1 représente une vue de profil du réacteur avec son système de séparation gaz solide selon l'invention.

La figure 2 représente une vue de dessus du réacteur selon l'invention et permet de mieux comprendre la structure du système de séparation gaz solide.

### DESCRIPTION SOMMAIRE DE L'INVENTION

La présente invention consiste en un réacteur gaz solide comportant en suivant l'écoulement de la suspension gaz solide, au moins une zone de conditionnement du catalyseur, au moins une première zone réactionnelle fonctionnant en lit dense ou rapide, au moins une seconde zone réactionnelle fonctionnant en lit entraîné et directement enchaînée à l'extrémité de sortie de la première zone réactionnelle, la seconde zone réactionnelle étant elle même directement connectée à un séparateur gaz - solide primaire. Le réacteur selon l'invention présente donc une distribution de temps de séjour entre les différentes zones telle que le temps de séjour des réactifs dans la première zone réactionnelle est compris entre 4 et 10 secondes, que le temps de séjour dans la seconde zone réactionnelle est compris entre 0,5 et 5 secondes et que le temps de séjour dans le séparateur primaire est compris entre 0,5 et 3 secondes.

Le temps de séjour dans le séparateur primaire représente généralement moins de 25% du temps de séjour total dans le réacteur, et préférentiellement moins de 10% du temps de séjour total dans le réacteur.

Le réacteur gaz solide objet de la présente invention comporte donc trois zones distinctes:
- une zone de conditionnement du catalyseur fonctionnant dans un régime de fluidisation dense et qui permet de conférer à la suspension gaz solide une fraction de vide comprise entre 0,45 et 0,85, et préférentiellement comprise entre 0,5 et 0,6.
- une première zone réactionnelle fonctionnant en fluidisation dense ou rapide, alimentée par une coupe hydrocarbure, éventuellement mélangée avec de la vapeur d'eau.
- une seconde zone réactionnelle suivant directement la première zone réactionnelle dans le sens d'écoulement des fluides réactionnels, et qui fonctionne dans un régime de fluidisation transporté. Cette second zone réactionnelle peut dans certains cas être alimentée par une charge hydrocarbonée secondaire, en plus des effluents issus de la première zone réactionnelle.
   La seconde zone réactionnelle s'enchaîne directement à la première zone réactionnelle, ce qui signifie qu'il n'y a aucune autre zone se situant entre l'extrémité de sortie de la première zone réactionnelle et l'extrémité d'entrée de la seconde zone réactionnelle. Le passage entre les deux zones peut néanmoins être progressif et le plus souvent réalisé au moyen d'une zone de transition de forme conique.
   La seconde zone réactionnelle est directement connectée par son extrémité de sortie au système de séparation gaz solide primaire faisant partie intégrante de la présente invention.
   Une description détaillée du système de séparation gaz solide primaire est donnée dans la suite du texte.
   Le réacteur gaz solide à une zone de conditionnement, deux zones réactionnelles fluidisées et système de séparation gaz solide intégré selon la présente invention est également caractérisé par le fait que le temps de contact dans la seconde zone réactionnelle transportée est compris entre 0,01 s et 0,5 seconde, et préférentiellement compris entre 0,05 et 0,3 secondes.
   Parallèlement, le temps de séjour des réactifs dans cette seconde zone réactionnelle varie généralement de 0,5 à 5 secondes.
   La première zone réactionnelle fonctionne généralement avec une fraction volumique comprise entre 0,55 et 0,9 et des vitesses superficielles gaz comprises entre 0,3 m/s et 5 m/s.
   La vitesse de la suspension gaz solide à l'entrée du séparateur primaire est généralement comprise entre 5 et 50 m/s, et préférentiellement comprise entre 15 et 30 m/s.
   Le temps de séjour du gaz dans le séparateur primaire est généralement compris entre 0,5 seconde et 3 secondes.
   La charge à traiter ou charge primaire est introduite dans une zone de conditionnement du catalyseur située en amont de la première zone réactionnelle. Le réacteur est ainsi alimenté par une charge hydrocarbonée pouvant être mélangée avec de la vapeur d'eau dans une proportion comprise entre 1 et 100% poids, et préférentiellement comprise entre 2 % et 25% poids.
   La seconde zone réactionnelle est alimentée par une charge hydrocarbonée secondaire de poids moléculaire inférieur ou égal à celui de la charge primaire alimentant la première zone réactionnelle.
   Une première application du réacteur gaz solide à deux zones réactionnelles fluidisées selon la présente invention consiste en la production de propylène, la charge primaire étant constituée d'un hydrocarbure bouillant en grande partie, c'est à dire au moins 90%, sous 560°, tel qu'une coupe essence, kérosène, gazole, ou distillat sous vide, ou un mélange de ces coupes, la charge secondaire étant constituée d'oligomères en C4 et C5.
   Une seconde application du réacteur gaz solide à deux zones réactionnelles fluidisées selon la présente invention consiste en la production d'oléfines en C2/C3/C4 à partir de méthanol.
   Une troisième application du réacteur gaz solide à deux zones réactionnelles fluidisées selon la présente invention consiste en la conversion de biomasse solide en coupes hydrocarbonées liquides.
   Une quatrième application du réacteur à lit fluidisé selon la présente invention consiste en la régénération de particules solides chargées en coke, la dite régénération s'effectuant par combustion à l'air ou à l'oxygène.
   Bien entendu, les applications citées ne sont pas limitatives du champs d'application de la présente invention qui concerne toute mise en oeuvre de réactions à l'état fluidisé, dans laquelle le contrôle du temps de séjour global dans le réacteur est un facteur essentiel.
   Plus précisément, le réacteur selon l'invention est particulièrement adapté au contrôle du temps de séjour global et à sa répartition dans les différentes zones du réacteur, à savoir, la première zone réactionnelle travaillant en fluidisation dense ou rapide, la seconde zone réactionnelle travaillant en fluidisation transportée, et le système de séparation gaz solide lui même.

### DESCRIPTION DETAILLEE DE L'INVENTION

La présente invention décrit un nouveau réacteur à lit fluidisé comprenant au moins une zone de conditionnement du catalyseur, au moins une première zone réactionnelle fonctionnant en fluidisation dense ou rapide, suivie d'au moins une seconde zone réactionnelle fonctionnant en régime transporté, et intégrant un système de séparation gaz solide directement connecté à l'extrémité supérieure de la seconde zone réactionnelle.

Les termes "première zone réactionnelle", "seconde zone réactionnelle" sont à comprendre en fonction du sens d'écoulement des fluides réactionnels qui est vertical ascendant.

Les particules solides sont introduites dans une zone de conditionnement précédant les zones réactionnelles, à travers au moins une conduite d'amenée, les dites particules solides pouvant provenir en partie d'une zone de régénération ou d'une zone d'échange thermique.

Le terme régénération est à comprendre au sens usuel de l'homme du métier, à savoir la restauration de l'activité du catalyseur par combustion du coke déposé au cours des phases réactionnelles. En général la zone de régénération du catalyseur usé fonctionnera en lit fluidisé.

De même, la zone d'échange thermique peut être de tout type, mais dans le cadre de la présente invention, elle sera préférentiellement en lit fluidisé.

Dans la suite du texte, on parlera de façon simplifiée de première zone réactionnelle sachant que celle ci fonctionne en régime de fluidisation dense ou rapide, et de seconde zone réactionnelle sachant que cette dernière fonctionne en régime de fluidisation transportée.

La seconde zone réactionnelle s'enchaîne directement à la première zone réactionnelle, ce qui signifie qu'il n'y a aucune autre zone se situant entre l'extrémité de sortie de la première zone réactionnelle et l'extrémité d'entrée de la seconde zone réactionnelle, si ce n'est éventuellement une zone de raccordement, généralement de forme conique.

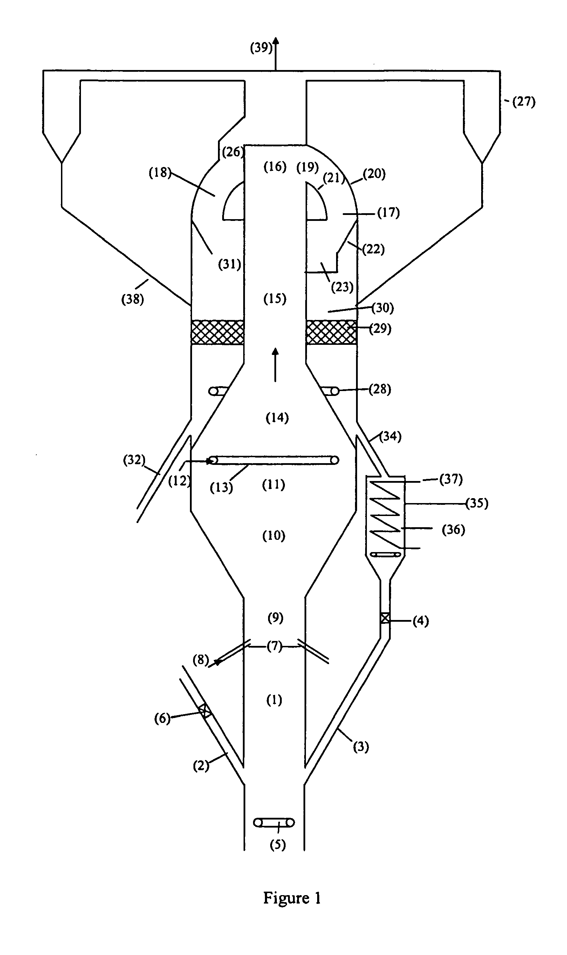

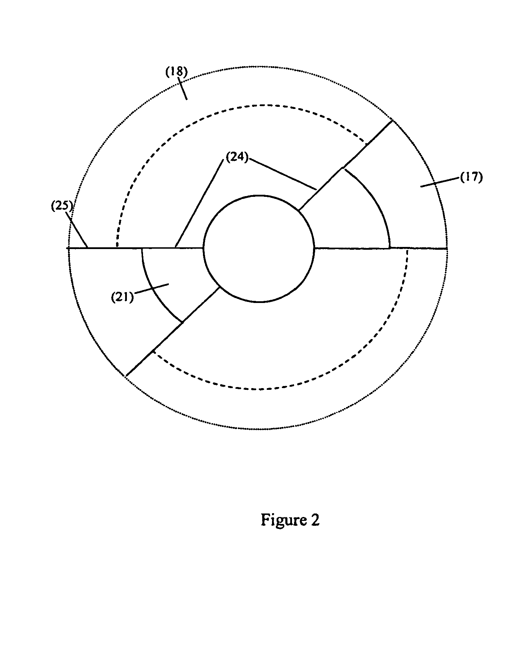

La suite de la description sera mieux comprise en suivant les figures 1 et 2.

La figure 1 montre une configuration particulière du réacteur selon l'invention dans laquelle les particules sont introduites dans une zone de conditionnement du catalyseur fonctionnant en régime dense (1) au moyen d'une conduite d'amenée (2) de particules fraîches ou régénérées, et d'une conduite d'amenée (3) de particules recyclées en provenance de l'échangeur (35).

Les particules fraîches et recyclées sont mélangées dans la partie inférieure de la zone de conditionnement (1), généralement par fluidisation au moyen d'un organe de fluidisation (5).

L'écoulement dans la partie inférieure de la zone de conditionnement (1) est caractérisé par une fraction vide comprise entre 0,45 et 0,85 , et préférentiellement comprise entre 0,5 et 0,6.

La fraction de vide d'un écoulement est définie comme le rapport entre le volume non occupé par les particules et la somme du volume non occupé et du volume occupé par les particules.

L'écoulement des particules fraîches est contrôlé par une vanne (6) située sur la conduite (2), et l'écoulement des particules recyclées est contrôlé par une vanne (4) située sur la conduite (3).

Les fluides réactifs (8) sont introduits à la base de la zone réactionnelle en phase dense ou rapide (9) par des moyens d'introduction (7) de manière à réaliser une bonne distribution des dits fluides sur l'ensemble de la section de la première zone réactionnelle dense ou rapide (9).

Les fluides réactifs (8) peuvent être introduits à l'état gazeux, liquide, ou en phase mixte gaz liquide. Lorsque les fluides réactifs sont introduits à l'état liquide, ils sont transformés en fines gouttelettes au moyen d'injecteurs (7) de manière à faciliter la vaporisation au contact des particules solides.

La taille des gouttelettes liquide issues des injecteurs (7) est telle qu'elle se situe à une valeur proche de la taille des particules solides, en étant préférentiellement inférieure à celles-ci.

Les réactions gaz solide se déroulent essentiellement dans la première zone réactionnelle (9), (10), (11), faisant suite à la zone de conditionnement (1).

La première zone réactionnelle peut elle même être divisée en un certain nombre de zones fonctionnant dans des régimes de fluidisation dense ou rapide. Ces différentes zones réactionnelles constituant la première zone réactionnelle sont caractérisées par une fraction volumique comprise entre 0,55 et 0,9 et des vitesses superficielles gaz comprises entre 0,3 et 5 m/s.

Les valeurs de vitesse gaz sont données pour des particules solides de taille (diamètre de Sauter) généralement comprise entre 40 et 100 µm (microns). La présente invention peut s'appliquer à des tailles de particules plus petites ou plus grandes que l'intervalle 40-100 µm (microns), les valeurs de vitesse gaz devant alors être ajustées pour maintenir le régime de fluidisation souhaité.

De manière préférentielle, l'invention s'applique à des particules dont la taille moyenne (diamètre de Sauter) varie entre 25 µm (microns) et 1mm, préférentiellement entre 50 et 500 µm (microns), la masse volumique de grain pouvant varier de 500 et 5000 kg/m3.

La zone de mise en contact de la charge et des particules solides (9) est suivie d'une zone d'élargissement progressif (10) de forme conique, elle même suivie d'une zone supérieure (11) ayant un volume suffisant pour atteindre le temps de séjour et le temps de contact nécessités par la réaction chimique.

L'ensemble des zones (9), (10) et (11) forme la première zone réactionnelle.

Dans la partie supérieure de la première zone réactionnelle (11), il est possible d'introduire un fluide auxiliaire (12) par un moyen de distribution (13) tel que par exemple des buses d'injection en paroi, ou une couronne (tore percé d'orifices convenablement dimensionnés) telle que représenté sur la figure 1, ou un tube percé d'orifices convenablement dimensionnés, ou tout autre système connu de l'homme du métier.

Ce fluide auxiliaire (12) peut être un fluide de refroidissement destiné à bloquer l'évolution des réactions mises en jeu dans la zone réactionnelle. Ce peut être également un réactif ayant une réactivité sensiblement plus élevée que le ou les réactifs introduits dans la partie inférieure de la première zone réactionnelle (9), (10), (11).

La première zone réactionnelle se termine par une zone de transition (14) généralement conique qui augmente la vitesse des gaz au dessus de 5m/s de manière à transporter l'ensemble des particules vers la seconde zone réactionnelle en lit transporté (15), (16).

La seconde zone réactionnelle en lit transporté (15), (16) représente un volume relativement faible en comparaison de la première zone réactionnelle (9), (10), (11).

Comme la vitesse de la suspension gaz solide dans cette seconde zone réactionnelle est assez élevée, le temps de séjour des gaz dans ladite zone est faible, et l'évolution des réactions chimiques est généralement négligeable, sauf éventuellement pour des réactions à cinétique très rapides.

Typiquement, le temps de contact des réactifs dans la seconde zone réactionnelle sera inférieur à 25%, et préférentiellement inférieur à 20 % du temps de séjour total dans l'ensemble du réacteur.

De ce fait, seules les réactions très rapides pourront éventuellement continuer à s'y dérouler de manière significative.

Le temps de contact optimal des réactifs avec le catalyseur dans la première zone réactionnelle (9), (10), (11) est généralement compris entre 0,5 seconde et 15 secondes, préférentiellement compris entre 1 et 5 secondes.

Le temps de séjour des réactifs dans la première zone réactionnelle est généralement compris entre 2 et 25 secondes, et préférentiellement compris entre 4 et 10 secondes.

Le temps de contact dans la seconde zone réactionnelle est généralement compris entre 0,01 s et 0,5 seconde, et préférentiellement compris entre 0,05 et 0,3 secondes.

Le temps de séjour des réactifs dans la deuxième zone réactionnelle varie typiquement de 0,5 à 5 secondes.

La partie supérieure de la seconde zone réactionnelle (16) communique avec le système de séparation gaz solide intégré qui consiste en une série de chambres de séparation (17) et de chambres de stripage (18), les dites chambres étant alternativement disposées en chapelles autour de la seconde zone réactionnelle (15), (16). Ce système de séparation gaz solide intégré constitue la séparation primaire.

Selon la variante préférée de la présente invention, le nombre de chambres de séparation est égal au nombre de chambres de stripage.

La communication entre la seconde zone réactionnelle (16) et chacune des chambres de séparation (17) est réalisée par des ouvertures (19) aménagées dans les parois latérales de la seconde zone réactionnelle (16), la dite zone (16) ayant sa section supérieure fermée, de manière à forcer le passage de la suspension gaz solide dans les dites chambres de séparation, via les ouvertures latérales (19).

Un déflecteur (21) forme une paroi interne à la chambre de séparation (17), sensiblement parallèle à la paroi supérieure arrondie (20).

La zone supérieure de la chambre de séparation (17) est donc délimitée d'une part par la paroi supérieure arrondie (20), d'autre part par le déflecteur (21).

La suspension gaz solide effectue donc une rotation autour du déflecteur (21) qui permet de séparer par effet de force centrifuge d'une part les particules solides évacuées vers la partie inférieure de la chambre de séparation (17), et d'autre part le gaz chargé d'une mineure partie de particules solides qui est évacué vers la chambre de stripage (18) attenante à la chambre de séparation par l'ouverture (24) visible sur la figure 2.

Les particules solides récupérées à la partie inférieure de la chambre de séparation (17) sont ensuite dirigées vers la zone de stripage (30) par l'ouverture (23).

Le gaz en majeure partie dépoussiéré à la suite de son passage dans la partie supérieure de la chambre de séparation (17) est introduit dans la chambres de stripage (18) attenante à la chambre de séparation (17) par l'intermédiaire de l'ouverture (24) percée dans la paroi verticale (25) de la dite chambre de séparation (17), à un niveau situé au dessous du déflecteur (21).

La chambre de stripage (18) communique par sa partie inférieure (31) avec la zone de stripage (30).

Le gaz chargé d'une mineure partie de particules solides est dirigé par la conduite (26) située en partie supérieure de la chambre de stripage (18), vers un système de séparation gaz solide secondaire représenté sur la figure 1 par un ensemble de cyclones disposés en parallèle (27).

Les particules solides séparées par le système de séparation secondaire sont réintroduites dans le réacteur au niveau de la zone de stripage (30) par des jambes de retour (38).

Le gaz dépoussiéré issu du système de séparation gaz solide secondaire est évacué par la ligne (39).

En cas de besoin, ce système de séparation secondaire peut être complété par un troisième système de séparation qui pourra être un second étage de cyclones, un ensemble de multi cyclones, ou un dépoussiéreur électrostatique.

De manière générale, tout système de dépoussiérage connu de l'homme du métier et compatible avec le réacteur selon la présente invention peut, selon les spécifications requises, être placé en aval du système de séparation gaz solide primaire qui fait partie intégrante du réacteur fluidisé selon la présente invention.

En raison de la concentration moyenne en particules solides dans le gaz au niveau du séparateur gaz solide primaire, qui est entre 5 et 500 fois plus faible que dans la deuxième zone réactionnelle opérant en régime transporté, le risque de développement de réactions secondaires au niveau du dit séparateur primaire, et à fortiori en aval de celui-ci, est très faible.

De plus, le temps de séjour du gaz dans le séparateur primaire sera généralement compris entre 0,1 et 10 secondes, et préférentiellement compris entre 0,5 et 3 secondes.

Les particules solides arrivant dans la zone de stripage (30), en provenance de la chambre de séparation (17) sont mises en contact, généralement à contre courant, avec un fluide inerte de manière à déplacer les hydrocarbures adsorbés à la surface des particules solides, et récupérer ces derniers avec le gaz quittant la chambre de séparation (17) par les ouvertures (24).

Le gaz inerte utilisé pour effectuer le stripage des particules solides peut être de la vapeur d'eau, de l'azote, ou tout autre gaz inerte vis à vis des particules solides, et d'un poids moléculaire relativement faible de manière à diminuer la pression partielle des hydrocarbures.

Le contact entre le gaz de stripage et les particules solides est réalisé au moyen d'un système de distribution (28) qui, préférentiellement, va provoquer une fluidisation dense des particules solides, le niveau du lit fluidisé résultant étant préférentiellement situé entre le niveau des ouvertures (23) et celui des ouvertures (31).

Dans le but d'améliorer le contact entre les particules solides et le gaz de stripage, il est possible d'aménager au sein de la zone de stripage (30) un système mécanique de contactage (29).

Parmi les systèmes de contactage bien connus de l'homme du métier, on peut citer de manière non limitative, les garnissages structurés ou en vrac, les systèmes basés sur des chicanes, les plaques corrugées, inclinées ou non. De tels systèmes favorisent l'écoulement descendant des particules solides, tout en respectant l'écoulement ascendant des bulles de gaz.

La présente invention n'est pas liée à un type particulier de système de contactage.

Les particules solides peuvent être extraites du réacteur au niveau de la zone de stripage (30) par l'intermédiaire de conduites (32) ou (34) pour être dirigées au moins en partie, soit vers une zone de régénération (non représentée sur la figure 1), soit être directement recyclées à l'entrée du réacteur fluidisé au niveau de la zone de conditionnement (1), soit encore être introduite dans une zone d'échange thermique (35) avant d'être réintroduites dans la zone de conditionnement (1).

Lorsqu'une partie des particules solides est introduite dans une zone de régénération, le flux de particules peut être contrôlé par une vanne (6) qui permet de maintenir un niveau de lit déterminé dans la zone de stripage (30).

L'échangeur fluidisé (35) contient un faisceau d'échange (36) pouvant avoir des formes diverses, compatible avec la fluidisation des particules à l'intérieur du dit échangeur.

La vitesse de fluidisation à l'intérieur de l'échangeur (35) est généralement comprise entre 5 cm/s et 1 m/s et préférentiellement comprise entre 5 cm/s et 0,5 m/s.

A l'intérieur du faisceau d'échange (36) circule un fluide (37) d'apport de chaleur si les particules solides doivent être réchauffées, ou d'élimination de chaleur si les particules solides doivent être refroidies.

La présente invention est compatible avec tout système d'échange de chaleur travaillant en lit fluidisé. Généralement, le fluide d'échange de chaleur (37) utilisé sera de la vapeur d'eau.

La réintroduction des particules dans la zone de conditionnement (1) du réacteur s'effectue par l'intermédiaire d'une conduite (3) équipée d'une vanne de contrôle du débit solide (4).

Le réacteur selon la présente invention peut s'appliquer au craquage catalytique de charges hydrocarbonées dans des conditions sévères dans le but de produire des hydrocarbures légers et à haute valeur ajoutée tels que l'essence, les LPG, et le propylène.

Une telle évolution du craquage catalytique est connue sous le terme de FCC pétrochimique.

Dans de telles unités de craquage catalytique sous haute sévérité, la charge peut être une coupe issue de la distillation atmosphérique du brut, ou une coupe résultant d'un premier traitement de d'hydrocraquage, d'hydrotraitement, ou d'oligomérisation.

Le catalyseur utilisé est généralement une silice alumine contenant des quantités significatives de zéolithes USY ou ReY.

Le catalyseur peut également contenir une certaine quantité de zéolithe ZSM5, soit directement mélangée au niveau du grain avec d'autres zéolithes, soit introduite sous forme de particules séparées.

Le catalyseur est divisé en fines particules d'un diamètre moyen (diamètre de Sauter) généralement compris entre 40 et 150 µm (microns). Il doit être régénéré, au moins partiellement, en continu comme dans une unité de craquage catalytique conventionnelle.

La masse volumique de grain des particules est généralement comprise entre 1000 et 1800 Kg/m*3, et préférentiellement comprise entre 1300 et 1700 Kg/m*3.

Les réactions de craquage se déroulent à des températures comprises entre 450°C et 700°C, préférentiellement entre 520°C et 600°C. La pression est généralement comprise entre 1 et 15 bars absolus, et préférentiellement comprise entre 1,1 et 3 bars absolus (1 bar= 0,1 MPa).

De la vapeur d'eau peut être injectée avec la charge dans des teneurs comprises entre 5% et 50 % poids rapporté à la charge, de manière à réduire la pression partielle des hydrocarbures et favoriser la sélectivité en oléfines.

Pour obtenir des rendements élevés en propylène, il peut être intéressant d'injecter une seconde charge hydrocarbure en amont de la seconde zone réactionnelle travaillant en écoulement transporté, par exemple une essence légère ou une coupe essence provenant d'un procédé d'oligomérisation d'oléfines légères de type C4-C5.

Le réacteur selon la présente invention pourra en particulier s'appliquer en connexion avec une unité de FCC conventionnelle travaillant sur un résidu atmosphérique ou un distillat sous vide, le terme connexion signifiant que, par exemple, l'essence issue du FCC conventionnel est en partie introduite comme charge primaire au niveau de la première zone réactionnelle du réacteur selon la présente invention, et qu'une coupe d'oligomères C4 /C5 est introduite comme charge secondaire au niveau de la seconde zone réactionnelle fonctionnant en lit transporté.

Plus généralement, la charge primaire pourra être constituée d'un hydrocarbure bouillant en grande partie (au moins 90%) sous 560°, tel qu'une coupe essence, kérosène, gazole, ou distillat sous vide, ou un mélange de ces coupes.

Une telle configuration permet de maximiser le rendement en propylène tout en limitant la production de gaz secs.

Une seconde application du réacteur selon la présente invention concerne la conversion d'hydrocarbures légers contenant un atome d'oxygène, tel que le méthanol en oléfines légères (éthylène, propylène et butènes).

Le catalyseur utilisé pour une telle réaction contient généralement de la SAPO 34, une zéolithe de type ZSM5, ou de type mordénite, ou un mélange de ces différents éléments.

Les réactions se déroulent à des températures généralement comprises entre 400°C et 650°C et sous des pressions comprises entre 1 et 15 bars absolus (1 bar = 10⁵ pascals), et préférentiellement comprises entre 1 et 5 bars absolus avec une faible pression partielle d'hydrocarbures obtenue par injection de vapeur d'eau, cette dernière pouvant représenter de 10 à 100 % poids du débit de méthanol.

Le catalyseur doit être régénéré en continu comme dans une unité de craquage catalytique.

Le ratio du débit de catalyseur allant vers la régénération sur le débit de charge fraîche est généralement compris entre 2 et 100, et préférentiellement compris entre 4 et 50.

Le rapport du débit de catalyseur recyclé au réacteur sur le débit de catalyseur régénéré est généralement compris entre 0,5 et 10, préférentiellement compris entre 1 et 5.

Une troisième application possible du réacteur selon la présente invention concerne la conversion de la biomasse en effluents liquide. La biomasse est introduite comme solide éventuellement mélangée avec un liquide réactif, ou transporté dans un flux gazeux, de manière à former une pseudo phase fluide introduite dans la zone réactionnelle.

Les réactions de craquage peuvent être thermiques lorsqu'on utilise un solide inerte tel que du sable, ou catalytiques si l'on utilise un solide de type catalyseur usé de FCC.

Les réactions se déroulent à des températures généralement comprises entre 450°C et 900°C, et préférentiellement entre 450°C et 650°C lorsqu'on désire maximiser la production d'effluents liquides.

Lorsque c'est la production d'oléfines qui est à maximiser, la température se situe préférentiellement entre 650°C et 900°C, et la pression opératoire est comprise entre 1 et 10 bars avec généralement une dilution de la charge biomasse par un courant d'eau ou de vapeur d'eau pouvant atteindre jusqu'à 100% poids de la biomasse introduite.

La phase solide utilisée dans le procédé doit généralement être régénérée pour brûler le coke déposé pendant la conversion de la biomasse.

Une quatrième application possible du réacteur selon la présente invention consiste dans la régénération de particules cokées ayant travaillés dans une unité de craquage catalytique, ou de particules ayant été utilisées comme fluide caloporteur dans un procédé thermique mais ayant subi également un dépôt de coke.

Généralement la teneur en coke est comprise entre 0,5 et 5% en pourcents poids ramené au poids des particules, et préférentiellement comprise entre 0,5 et 1% poids.

La température nécessaire à la régénération est généralement comprise entre 550 et 900°C, préférentiellement comprise entre 600 et 800°C avec un rapport air sur coke généralement compris entre 8 et 20, préférentiellement compris entre 10 et 15.

### EXEMPLES SELON L'INVENTION

Les avantages du réacteur selon la présente invention seront mieux compris à la lumière des deux exemples ci dessous qui concernent une application de type craquage catalytique à haute sévérité en vue de produire des oléfines.
1) Le premier exemple est un exemple comparatif entre un réacteur en lit fluidisé conventionnel et le réacteur en lit fluidisé selon la présente invention.

Il permet de comparer le craquage catalytique de VGO (distillat sous vide de pétrole) dans des conditions très sévères, mis en oeuvre dans une technologie conventionnelle en lit fluidisé (noté LF dans le tableau 1) et dans un réacteur selon l'invention utilisant deux zones réactionnelles, la première zone réactionnelle fonctionnant en lit fluidisé dense, et la seconde zone réactionnelle fonctionnant en lit fluidisé transporté (noté NC dans le tableau 1).

Les principales conditions opératoires, les dimensions géométriques et les structures de rendements sont consignées dans le tableau 1 ci dessous.

Le réacteur en lit fluidisé conventionnel est constitué d'une phase dense surmontée d'une phase diluée. La phase dense fonctionne en fluidisation rapide a un diamètre de 4,42m et la vitesse superficielle des fluides est de 0,75 m/s. Pour limiter l'entraînement, la phase diluée située au dessus de la phase dense a une section plus importante de 5,42 m, et la vitesse superficielle des fluides est donc plus faible soit 0,5m/s.

Le transport des particules dans cette zone diluée est donc relativement faible, et seules les fines particules sont entraînées vers la zone de séparation en aval.

Cette zone diluée n'opère donc pas en régime transporté, car seule une partie des particules subit un entraînement. Il résulte de cette mise en oeuvre que le temps de séjour dans la phase diluée au dessus du lit fluidisé dense, ou phase dense, est supérieur au temps de séjour dans la phase dense (20 secondes contre 4,2 secondes), ce qui favorise la dégradation thermique des produits de réaction.

Le réacteur en lit fluidisé selon la présente invention (NC) est différent par le fait que d'une part, la vitesse superficielle dans la première zone réactionnelle est plus importante, soit 1,5 m/s (contre 0,75 m/s dans le réacteur conventionnel), et que d'autre part, la deuxième zone réactionnelle opère en régime transporté à une vitesse superficielle de 10m/s.

Toutes les particules entrant dans cette seconde zone réactionnelle sont donc transportées.

Le diamètre de la première zone réactionnelle est plus faible que dans le réacteur à lit fluidisé conventionnel (3,13 m contre 4,4 m). Néanmoins, le temps de contact dans le réacteur en lit fluidisé conventionnel et dans le réacteur en lit fluidisé selon la présente invention est similaire grâce à une hauteur équivalente un peu plus importante.

Le diamètre de la deuxième zone réactionnelle est lui beaucoup plus faible (1,17 m contre 5,42 m).

Il en résulte une forte diminution du temps de séjour dans la deuxième zone réactionnelle qui passe de 20 secondes dans le réacteur conventionnel à moins de 1 seconde dans le réacteur selon l'invention.

Ces différences de géométries, de vitesse de fluidisation et de temps de séjour se traduisent par un gain substantiel en sélectivité illustré dans le tableau 1.

Il en résulte essentiellement
- moins de gaz secs, produits de dégradation thermique,
- moins de coke,
- plus d'essence et de coupes légères C3-C4 (LPG)

**Tableau 1**

| **Température et pression** | LF | NC | |
|---|---|---|---|
| temperature moyenne | 565,00 | 565,00 | °C |
| Pression sortie reacteur | 2,00 | 2,00 | Bar |

| **charge (distillat sous vide)** | LF | NC | |
|---|---|---|---|
| KUOP | 12,40 | 12,40 | (-) |
| d4,15 | 0,86 | 0,86 | (-) |
| Teneur en Hydrogène | 0,12 | 0,12 | (% pds) |
| Teneur en Soufre | 13,50 | 13,50 | (% pds) |
| Débit de charge | 9,78 | 9,78 | kg/s |
| Taux de vapeur | 25,00 | 25,00 | (% pds) |

| **conditions opératoires première zone** | LF | NC | |
|---|---|---|---|
| Diamètre premiere zone | 4,42 | 3,13 | (m) |
| Hauteur équivalente première zone | 3,14 | 8,00 | (m) |
| Vitesse superficielle de fludisation première zone | 0,75 | 1,50 | (m/s) |
| Temps de contact 1ere zone | 1,52 | 1,52 | (s) |
| Temps de séjour première zone | 4,19 | 5,33 | (s) |

| **conditions opératoires deuxième zone** | LF | NC | |
|---|---|---|---|
| Diamètre seconde zone | 5,42 | 1,17 | (m) |
| Hauteur équivalente seconde zone | 10,03 | 10,00 | (m) |
| Vitesse superficielle de fludisation 2eme zone | 0,50 | 10,74 | (m/s) |
| Temps de contact seconde zone | 0,20 | 0,05 | (s) |
| Temps de séjour seconde zone | 20,06 | 0,93 | (s) |
| Temps de séjour zone de séparation | | 1,00 | (s) |

| **Structure de rendements** | LF | NC | |
|---|---|---|---|
| gaz sec (H2S, H2, C1,C2) | 8,20 | 5,70 | %pds charge |
| LPG | 46,00 | 46,50 | %pds charge |
| Essence (C5+, 200°C) | 23,50 | 27,80 | %pds charge |
| LCO+DO (200°C+) | 14,50 | 13,50 | %pds charge |
| Coke | 7,80 | 6,50 | %pds charge |

### 2) Le deuxième exemple illustre la mise en oeuvre du réacteur selon l'invention pour le craquage d'hydrocarbures légers en vue de produire un maximum de propylène.

L'exemple fait appel à un réacteur selon l'invention utilisant une succession de deux zones réactionnelles, la première opérant en fluidisation rapide et la deuxième opérant en fluidisation transportée.

La charge principale est une essence de craquage provenant d'une zone réactionnelle de FCC conventionnel.

Une seconde charge est introduite à l'entrée de la deuxième zone réactionnelle opérant en régime transporté. Cette seconde charge est une essence beaucoup plus réactive constituée essentiellement d'oléfines obtenues par oligomérisation des coupes C4-C5.

Cette essence d'oligomérisation nécessite un temps de contact beaucoup plus faible pour craquer catalytiquement. Il est donc particulièrement intéressant de l'injecter dans la deuxième zone réactionnelle, ce qui limite les réactions de surcraquage et de transfert d'hydrogène qui se produiraient inévitablement si cette deuxième charge était injectée dans la première zone réactionnelle dense.

Un séparateur rapide tel que décrit dans l'invention permet une séparation rapide en 0,5 seconde de l'effluent gaz et des particules solides qui sont réintroduites dans la zone de stripage du réacteur selon l'invention.

Le réacteur selon la présente invention permet donc de traiter deux charges de réactivité très différentes tout en limitant la dégradation des produits formés. Il en résulte une maximisation des produits tels que les oléfines en C3 et en C4 représentant plus de 45% en poids des charges injectées.

Ce second exemple illustre la possibilité d'utiliser le présent réacteur en production d'oléfines à partir d'une première charge essence de FCC, et d'une seconde charge essence d'oligomérisation, ces deux charges étant envoyées respectivement dans la première zone réactionnelle et la seconde zone réactionnelle en vue d'optimiser la conversion en oléfines.

**Tableau 2**

| | | |
|---|---|---|
| Pression sortie reacteur | 2,0 | bars abs |
| Temperature moyenne de reaction | 600,0 | °C |
| Diamètre premiere zone | 3,11 | m |
| Hauteur équivalente première zone | 10,00 | m |
| Temps de contact 1ere zone | 1,90 | s |
| Temps de séjour première zone | 6,67 | s |
| Diamètre seconde zone | 1,10 | m |
| Hauteur équivalente seconde zone | 10,00 | m |
| Temps de contact seconde zone | 0,02 | s |
| Temps de séjour seconde zone | 0,50 | s |
| Temps de séjour séparation | 0,50 | s |

| **charge 1: essence de craquage** | | |
|---|---|---|
| densité d4,15 | 0,721 | (-) |
| hydrogène | 14,21 | % pds |
| soufre | 550,00 | ppm pds |
| teneur en oléfines | 49,49 | % pds |
| teneur en aromatiques | 14,88 | % pds |
| Astm D2887 10% | 24 | °C |
| Astm D2887 50% | 87 | °C |
| Astm D2887 90% | 149 | °C |
| débit essence | 50 | t/h |
| taux de vapeur | 0,10 | (pds vapeur/ pds essence) |

| **charge 2 : essence d'oligomérisation** | | |
|---|---|---|
| densité d4,15 | 0,739 | (-) |
| hydrogène | 14,42 | % pds |
| soufre | 0,00 | ppm pds |
| teneur en oléfines | 96,9 | % pds |
| teneur en aromatiques | 0,0 | % pds |
| Astm D2887 10% | 113 | °C |
| Astm D2887 50% | 119 | °C |
| Astm D2887 90% | 198 | °C |
| débit essence | 25 | |
| taux de vapeur | 0,10 | (pds vapeur/pds essence) |

| **production ex réacteur** | | |
|---|---|---|
| gaz sec (H2, H2S, C1,C2) | 5,4 | t/h |
| GPL | 39,0 | t/h |
| Propylène | 18,3 | t/h |
| butenes | 16,8 | t/h |

## Revendications

1. Réacteur gaz solide à deux zones réactionnelles fluidisées et système de séparation gaz solide intégré, présentant au moins une zone de conditionnement du catalyseur (1), au moins une première zone réactionnelle fonctionnant en régime dense ou rapide (9), (10), (11) et alimentée par une charge primaire, suivie d'au moins une seconde zone réactionnelle fonctionnant en régime transporté (15), la seconde zone réactionnelle étant directement connectée à un séparateur gaz solide primaire, ledit le séparateur primaire étant constitué d'une série de chambres de séparation (17) et de chambres de stripage (18), les dites chambres étant alternativement disposées en chapelles autour de la seconde zone réactionnelle transportée (15), (16), la communication entre la seconde zone réactionnelle transportée (15), (16) et chacune des chambres de séparation (17) étant réalisée par des ouvertures (19) aménagées dans les parois latérales de la seconde zone réactionnelle transportée (16),
- les chambres de séparation (17) comprenant une paroi supérieure arrondie (20) et un déflecteur sensiblement parallèle (21) à ladite paroi (20), et communiquant avec la zone de stripage (30) par des ouvertures (23) placées dans la partie inférieure desdites chambres de séparation (17)
- les chambres de stripage (18) a) communiquant par leur partie inférieure (31) avec la zone de stripage (30), b) communiquant avec les chambre de séparation (17) au moyen des ouvertures (24) percées dans la paroi verticale (25) desdites chambre de séparation (17) à un niveau situé au dessous du déflecteur (21) desdites chambres de séparation (17) et, c) communiquant par leur partie supérieure au moyen de la conduite (26) avec au moins un système de séparation gaz solide secondaire (27).

2. Procédé de production d'oléfines en C2/C3/C4 mettant en oeuvre le réacteur selon la revendication 1, dans lequel le temps de séjour du gaz dans la première zone réactionnelle est compris entre 4 et 10 secondes, le temps de séjour dans la seconde zone réactionnelle est compris entre 0,5 s et 5 secondes, et le temps de séjour dans le séparateur primaire est compris entre 0,5 et 3 secondes.

3. Procédé de production d'oléfines en C2/C3/C4 selon la revendication 2, dans lequel la vitesse de la suspension gaz solide à l'entrée du séparateur primaire est comprise entre 15 m/s et 30 m/s.

4. Procédé de production d'oléfines en C2/C3/C4 selon l'une quelconque des revendications 2 à 3, dans lequel la charge à traiter est introduite dans une zone de conditionnement du catalyseur **caractérisée par** une fraction vide comprise entre 0,5 et 0,6.

5. Procédé de production d'oléfines en C2/C3/C4 selon l'une quelconque des revendications 2 à 4, dans lequel la première zone réactionnelle a une fraction volumique comprise entre 0,55 et 0,9 et fonctionne avec des vitesses superficielles gaz comprises entre 0,3 m/s et 5 m/s.

6. Procédé de production d'oléfines en C2/C3/C4 selon l'une quelconque des revendications 2 à 5, dans lequel la seconde zone réactionnelle est alimentée par une charge hydrocarbonée secondaire, de poids moléculaire inférieur ou égal à celui de la charge primaire alimentant la première zone réactionnelle.

7. Procédé de production d'oléfines en C2/C3/C4 selon l'une quelconque des revendications 2 à 6, dans lequel la zone de stripage (30) fonctionne en lit fluidisé dense et est équipée d'un système mécanique de contactage entre les particules solide et le gaz de stripage.

8. Procédé de production d'oléfines en C2/C3/C4 selon l'une quelconque des revendications 2 à 7, dans lequel la zone de stripage (30) fonctionne en lit dense avec un niveau de lit compris entre le niveau des ouvertures (23) de la partie inférieure des chambres de séparation (17), et le niveau des ouvertures (31) de la partie inférieure des chambres de stripage (18).

9. Procédé de production d'oléfines en C2/C3/C4 selon l'une quelconque des revendications 2 à 8, dans lequel la charge primaire est constituée d'un hydrocarbure bouillant en grande partie, c'est à dire au moins 90%, sous 560°, tel qu'une coupe essence, kérosène, gazole, ou un distillat sous vide, ou un mélange de ces coupes, la charge secondaire étant constituée d'oligomères en C4 et C5.

10. Procédé de production d'oléfines en C2/C3/C4 selon l'une quelconque des revendications 2 à 9, dans lequel la charge à traiter est du méthanol.

## Claims

1. A gas-solid reactor with two fluidized reaction zones and an integrated gas-solid separation system having at least one catalyst containment zone (1), at least one first reaction zone operating in dense or fast mode (9), (10), (11) and supplied with a primary feed, followed by at least one second reaction zone operating in transported mode (15), the second reaction zone being directly connected to a primary gas-solid separator, said primary separator being constituted by a series of separation chambers (17) and stripping chambers (18), said chambers being disposed alternately around the side of the second transported mode reaction zone (15), (16), the communication between the second transported mode reaction zone (15), (16) and each of the separation chambers (17) being achieved via openings (19) provided in the side walls of the second transported reaction zone (16),
- the separation chambers (17) comprising a rounded upper wall (20) and a deflector (21) substantially parallel to said wall (20), and communicating with the stripping zone (30) via openings (23) located in the lower portion of said separation chambers (17),
- the stripping chambers (18) a) communicating via their lower portion (31) with the stripping zone (30), and b) communicating with the separation chamber (17) via the opening (24) cut in the vertical wall (25) of said separation chamber (17) at a level located beneath the deflector (21), and c) communicating by their upper portion, via the line (26), with at least one secondary gas-solid separation system (27).

2. A process for producing C2/C3/C4 olefins employing the gas-solid reactor gas-solid reactor according to claim 1, in which the residence time for the gas in the first reaction zone is in the range 4 to 10 seconds, the residence time in the second reaction zone is in the range 0.5 seconds to 5 seconds and the residence time in the primary separator is in the range 0.5 to 3 seconds.

3. A process for producing C2/C3/C4 olefins employing the gas-solid reactor gas-solid reactor according to claim 2, in which the rate of gas-solid suspension at the inlet to the primary separator is in the range 15 m/s to 30 m/s.

4. A process for producing C2/C3/C4 olefins employing the gas-solid reactor gas-solid reactor according to any of claims 2 or 3, in which the feed to be treated is introduced into a catalyst containment zone **characterized by** a void fraction in the range 0.5 to 0.6.

5. A process for producing C2/C3/C4 olefins employing the gas-solid reactor gas-solid reactor according to any of claims 2 to 4, in which the first reaction zone has a volume fraction in the range 0.55 to 0.9 and functions with superficial gas rates in the range 0.3 m/s to 5 m/s.

6. A process for producing C2/C3/C4 olefins employing the gas-solid reactor gas-solid reactor according to any of claims 2 to 5, in which the second reaction zone is supplied with a secondary hydrocarbon feed with a molecular weight which is less than or equal to that of the primary feed supplying the first reaction zone.

7. A process for producing C2/C3/C4 olefins employing the gas-solid reactor gas-solid reactor according to any of claims 2 to 6, in which the stripping zone (30) functions in dense fluidized bed mode and is provided with a mechanical system for contacting the solid particles and the stripping gas.

8. A process for producing C2/C3/C4 olefins employing the gas-solid reactor gas-solid reactor according to any of claims 2 to 7, in which the stripping zone (30) functions in dense bed mode with a bed level in the range between the openings (23) of the lower portion of the separation chambers (17) and the openings (31) of the lower portion of the stripping chambers (18).

9. A process for producing C2/C3/C4 olefins employing the gas-solid reactor gas-solid reactor according to any of claims 2 to 8, in which the primary feed is constituted by a hydrocarbon which boils mainly, i.e. at least 90%, below 560°, such as a gasoline, kerosene, gas oil or vacuum distillate cut, or a mixture of said cuts, the secondary feed being constituted by C4 and C5 oligomers.

10. A process for producing C2/C3/C4 olefins employing the gas-solid reactor with two fluidized reactions zones according to any one of claims 1 to 9 in which the feed to be treated is methanol.

## Patentansprüche

1. Gas-Feststoff-Reaktor mit zwei Wirbelbettreaktionszonen und eingebautem Gas-Feststoff-Trennsystem, der mindestens eine Konditionierungszone des Katalysators (1) aufweist, wobei mindestens eine erste Reaktionszone im dichten oder schnellen System funktioniert (9), (10), (11) und von einer Primärcharge versorgt wird, gefolgt von mindestens einer zweiten Reaktionszone, die im transportierten System (15) funktioniert, wobei die zweite Reaktionszone direkt an einen Gas-Feststoff-Primärtrenner angeschlossen ist, wobei der Primärtrenner aus einer Reihe von Trennungskammern (17) und Strippingkammern (18) besteht, wobei die Kammern abwechselnd in Kapellen um die zweite, transportierte Reaktionszone (15), (16) angeordnet sind, wobei die Kommunikation zwischen der zweiten transportierten Reaktionszone (15), (16) und jeder der Trennungskammern (17) durch Öffnungen (19) erfolgt, die in den Seitenwänden der zweiten transportierten Reaktionszone (16) eingerichtet sind,
- wobei die Trennungskammern (17) eine gerundete obere Wand (20) und einen Ablenker (21) aufweisen, der im Wesentlichen zu der Wand (20) parallel ist und mit der Strippingzone (30) durch Öffnungen (23) kommuniziert, die in dem unteren Teil der Trennungskammern (17) platziert sind,
- wobei die Strippingkammern (18) a) durch ihren unteren Teil (31) mit der Strippingzone (30) kommunizieren, b) mit den Trennungskammern (17) mittels der Öffnungen (24) kommunizieren, die in der senkrechten Wand (25) der Trennungskammern (17) auf einem Niveau gebohrt sind, das unterhalb des Ablenkers (21) der Trennungskammern (17) liegt, und c) durch ihren oberen Teil mittels der Leitung (26) mit mindestens einem Gas-Feststoff-Sekundärtrennsystem (27) kommunizieren.

2. Verfahren zur Produktion von Olefinen in C2/C3/C4, das den Reaktor nach Anspruch 1 verwendet, bei dem die Verweilzeit des Gases in der ersten Reaktionszone zwischen 4 und 10 Sekunden, die Verweilzeit in der zweiten Reaktionszone zwischen 0,5 und 5 Sekunden und die Verweilzeit in dem Primärtrenner zwischen 0,5 und 3 Sekunden liegt.

3. Verfahren zur Produktion von Olefinen in C2/C3/C4 nach Anspruch 2, bei dem die Geschwindigkeit der Gas-Feststoff-Suspension am Eingang des Primärtrenners zwischen 15 m/s und 30 m/s liegt.

4. Verfahren zur Produktion von Olefinen in C2/C3/C4 nach einem der Ansprüche 2 bis 3, bei dem die zu behandelnde Charge in eine Konditionierungszone des Katalysators eingeführt wird, die durch eine Vakuumfraktion zwischen 0,5 und 0,6 **gekennzeichnet** ist.

5. Verfahren zur Produktion von Olefinen in C2/C3/C4 nach einem der Ansprüche 2 bis 4, bei dem die erste Reaktionszone eine Volumenfraktion zwischen 0,55 und 0,9 aufweist und mit Oberflächen-Gasgeschwindigkeiten zwischen 0,3 m/s und 5 m/s funktioniert.

6. Verfahren zur Produktion von Olefinen in C2/C3/C4 nach einem der Ansprüche 2 bis 5, bei dem die zweite Reaktionszone von einer bituminösen Sekundärcharge mit einem Molgewicht kleiner oder gleich dem der Primärcharge, die die erste Reaktionszone versorgt, versorgt wird.

7. Verfahren zur Produktion von Olefinen in C2/C3/C4 nach einem der Ansprüche 2 bis 6, bei dem die Strippingzone (30) als dichtes Wirbelbett funktioniert und mit einem mechanischen Kontaktgabesystem zwischen den Feststoffpartikeln und dem Strippinggas ausgerüstet ist.

8. Verfahren zur Produktion von Olefinen in C2/C3/C4 nach einem der Ansprüche 2 bis 7, bei dem die Strippingzone (30) als dichtes Wirbelbett mit einem Bettniveau zwischen dem Niveau der Öffnungen (23) des unteren Teils der Trennungskammern (17) und dem Niveau der Öffnungen (31) des unteren Teils der Strippingkammern (18) funktioniert.

9. Verfahren zur Produktion von Olefinen in C2/C3/C4 nach einem der Ansprüche 2 bis 8, bei dem die Primärcharge aus einem zum großen Teil siedenden Kohlenwasserstoff besteht, das heißt aus mindestens 90 %, unter 560°C, wie zum Beispiel eine Benzin-, Kerosin-, Diesel- oder Destillatfraktion unter Vakuum, oder einem Gemisch dieser Fraktionen, wobei die Sekundärcharge aus Oligomeren in C4 und C5 besteht.

10. Verfahren zur Produktion von Olefinen in C2/C3/C4 nach einem der Ansprüche 2 bis 9, bei dem die zu behandelnde Charge Methanol ist.
